# EUROPÄISCHE PATENTANMELDUNG

(11) **EP 1 854 976 A1**
(43) Veröffentlichungstag der Anmeldung: **14.11.2007**
(21) Anmeldenummer: 06090068.5
(22) Anmeldetag: 09.05.2006
(51) Int. Cl.: F02C 3/16, B63H 21/16

(54) **Turboantriebsrad, insbesondere für Schiffspropeller**

(71) Anmelder: Gehrke, Horst, 13359 Berlin (DE)
(72) Erfinder: Gehrke, Horst, 13359 Berlin (DE)

(57) **Zusammenfassung**

Das Turboantriebsrad (1) vereinigt auf sich die Maschinenelemente Verdichter, Brennkammer sowie zur Kraftübertragung auf die Propellerwelle (4) die Turbine und läuft in einem um die Propellerwelle herumgebauten, feststehenden Radgehäuse (2) um. Es kann als selbständige Maschineneinheit arbeiten oder zu mehreren auf einer Propellerwelle hintereinander-geschaltet als Turboantriebsräder-System auf einen Propeller wirken.
Die von den Radialverdichtern (10) auf beiden Seiten des Turbinenrades (5) angesaugte Verbrennungsluft gelangt in die auf dem Umfang des Turbinenrades befindlichen Brennkammern (7), die an eine Kraftstoff- und Stromzuführung angeschlossen sind. Die Treibgase werden über Brennkammer-Auslaßdüsen (28) in die unmittelbar neben den Brennkammern im Radgehäuse fest angeordneten Schaufelkränze (26) gepreßt und treiben das Turbinenrad per Rückstoß an.

## Beschreibung

Bei den großen Containerschiffen, deren Antriebsleistung von einer ohne Getriebe auf den Propeller wirkenden Maschine erbracht wird, ist ein Anpassen des Motordrehmoments an die wechselnden Schiffswiderstände nur in engen Grenzen möglich. Im Bereich langsamer Fahrstufen, wenn mit niedrigen Drehzahlen ein hohes Drehmoment geliefert werden muß, arbeiten die Maschinen nicht in ihrem günstigsten Betriebspunkt, was zu hohem Treibstoffverbrauch führt. Es werden deshalb Überlegungen zur Verbesserung der Maschinen und zu alternativen Antriebssystemen angestellt. Neben anderen Vorschlägen ist eine Idee für eine Antriebsanlage bekannt, bei der große langsamlaufende Antriebsräder mit verschiedenen Arbeitsmitteln tangential beaufschlagt werden und aufgrund ihres langen Hebelarms ein hohes Drehmoment liefern und energiesparend arbeiten(DE 103 00 742 A1).

Aufgabe der Erfindung ist es, auf der Basis von Antriebsrädern eine Antriebsanlage zu schaffen, bei der die Gesamtmaschinenleistung auf mehrere, auf einer Propellerwelle hintereinandergeschaltete Antriebsräder aufgeteilt ist, so daß durch Zu- bzw. Abschalten von Rädern die Maschinenleistung der jeweiligen Propellerbelastung angepaßt werden kann und die zum Einsatz kommenden Räder immer in ihrem günstigsten Betriebspunkt arbeiten.

Erfindungsgemäß werden zur Lösung der Aufgabe Turboantriebsräder verwendet, die selbständig oder zu Radsätzen mit verschiedenen Drehmomenten zusammengefaßt arbeiten können, wobei es Schaltgetriebe zur Drehzahlangleichung zwischen den Radsätzen ermöglichen, daß sie mit ihren eigenen unterschiedlichen Nenndrehzahlen und Nennleistungen über einen Wellenstrang auf den Propeller wirken.

Das Turboantriebsrad ist für das selbständige Arbeiten so konstruiert, daß es die Maschinenelemente Verdichter (z.B. Radial- oder Kolbenverdichter), Brennkammern und zur Kraftübertragung auf die Propellerwelle eine Turbine auf sich vereinigt. Das in einem feststehenden Radgehäuse umlaufende Turbinenrad trägt auf seinem Umfang gleichmäßig verteilt die Brennkammern. Auf beiden Seiten des Turbinenrades befindet sich im Radgehäuse ein um die Propellerwelle herumgebauter Radialverdichter, dessen Verdichtergehäuse fest mit der Seitenwand des Radgehäuses verbunden ist. Jedem Radialverdichter ist ein über die Propellerwelle gezogenes und drehbar gelagertes Hohlwellenstück zugeordnet, das die Verdichterräder trägt. Die Hohlwellenstücke werden jeweils über ein Planetengetriebe durch das umlaufende Turbinenrad angetrieben, wobei der Drehsinn der Verdichterräder entgegengesetzt zur Drehrichtung des Turbinenrades ausgerichtet und ihre Drehzahl auf das für die Verdichtung der angesaugten Luft erforderliche Maß eingestellt wird.

Die von den Verdichterrädern über Ansaugstutzen angesaugte und verdichtete Luft gelangt über Leitkanäle in die an eine Kraftstoff- und Stromzuführung angeschlossenen Brennkammern. Unmittelbar neben den Brennkammern auf dem Turbinenrad sind auf beiden Seiten Schaufelkränze auf einer in das Radgehäuse eingebauten Trommel fest angeordnet. Die heißen Treibgase werden über die Brennkammer-Auslaßdüsen in die Schaufelkränze gepreßt und treiben das Turbinenrad per Rückstoß an. Die Verbrennungsgase gelangen nach Abgabe ihrer Energie an das Turbinenrad in eine Abgasspirale.

Bei Schiffspropellern, die mit niedrigerer Drehzahl als das Turbinenrad betrieben werden sollen, wird das Turbinenrad auf der Propellerwelle nur drehbar gelagert und auf beiden Seiten über ein Planetengetriebe, das seine Drehzahl auf die vorgesehene Drehzahl des Propellers untersetzt, mit der Propellerwelle verbunden.

Die Kühlung der Brennkammern und Schaufelkränze erfolgt durch Kühlwasser-Ringräume im Radgehäuse und aufgrund der Rotation der Brennkammern durch Luftkühlung.

Das Turboantriebsrad arbeitet bei der Krafterzeugung mit "kurzen Wegen": der Verdichter ist nahe den Brennkammern angeordnet und die Schaufelkränze, in die die Treibgase gepreßt werden, befinden sich unmittelbar neben den Brennkammern. Die gewonnene Kraft wird direkt in Rotationsenergie umgesetzt.

Die Charakteristik eines Turboantriebsrades ist durch die Zahl der Brennkammern und durch das Verdichtungsverhältnis leicht veränderbar. Turboantriebsräder nach Anspruch 3 (Verdichtung der Verbrennungsluft erfolgt in Kompressionszylindern auf dem Turbinenrad) sind insbesondere für größere langsamlaufende Anlagen gedacht.

Ein aus mehreren auf einer Propellerwelle hintereinandergeschalteten Rädern bestehendes Turboantriebsräder-System bietet folgende Vorteile:
- durch die Möglichkeit, die Maschinenleistung durch Zu- bzw. Abschalten von Rädern während des Betriebs der jeweiligen Fahrstufe bzw. Propellerbelastung anpassen zu können, arbeiten die zum Einsatz kommenden Räder immer in ihrem günstigsten Betriebspunkt und tragen dadurch zur Energieeinsparung bei; nicht arbeitende Räder laufen leer mit oder werden abgekuppelt,
- Turboantriebsräder, die etwa den gleichen Durchmesser wie der anzutreibende Propeller haben, verfügen über einen langen Hebelarm (Hebelarmlänge entspricht dem Radius des Propellers) und können deshalb bei entsprechender Drehzahl ein hohes Drehmoment liefern; bei einem 10,-m-Propeller z.B. beträgt die Hebelarmlänge ca. 4,- m(!), während der Kurbeltrieb eines Schiffsdiesels mit einem 2,50m-Hubraum nur mit einem Hebelarm von 1,25 m Länge auf den Propeller wirkt,
- bei einem aus mehreren Rädern bzw. Radsätzen bestehenden Turboantriebsräder-System können ein oder zwei Räder - über eine Schaltkupplung mit der Wellenanlage koppelbar - als Leerlauf- und Anfahrräder vorgesehen werden,
- bei einem Turboantriebsräder-System, dessen Räder bzw. Radsätze verschiedene Hebelarmlängen aufweisen (abgestuft sind) und die auf der Propellerwelle nach verschiedenen Drehzahlbereichen gegliedert sind, können die durch Schaltgetriebe zur Drehzahlangleichung miteinander verbundenen Radsätze mit ihren unterschiedlichen Drehmomenten bestimmten Fahrstufen bzw. Propellerbelastungen zugeordnet werden; nach dem Einrücken der Hauptkupplung und dem Anfahren mit dem am weitesten vorn stehenden Radsatz"Leerlauf und Anfahren", dessen Drehzahl von dem in die Hauptkupplung einbezogenen Schaltgetriebe zur Drehzahlangleichung auf die Propellerwelle übertragen worden ist, werden zur Fahrterhöhung die sich zum Propeller hin anschließenden schneller laufenden Radsätze zugeschaltet, wobei jeweils mit dem betreffenden Schaltgetriebe zur Drehzahlangleichung die Drehzahl des langsamer laufenden Radsatzes an die Drehzahl des schneller laufenden Radsatzes angeglichen wird, so daß der Propeller ab dem zugeschalteten Radsatz mit dessen Drehzahl umläuft bis schließlich sämtliche Radsätze im Einsatz sind - alle wirken über die zwischengeschalteten Schaltgetriebe zur Drehzahlangleichung mit ihrer eigenen Nenndrehzahl und Nennleistung über denselben Wellenstrang auf den Propeller - und der Propeller mit der Drehzahl des schnellsten Radsatzes dreht; ein im Wellenstrang getrennt aufgestelltes Wechselgetriebe zur Drehmomentanpassung ist bei diesem System nicht erforderlich,
- die Gesamtmaschinenleistung eines bestehenden Turboantriebsräder-Systems kann durch Wegnehmen bzw. Hinzufügen von Rädern problemlos verkleinert bzw. vergrößert werden,
- bei den Turboantriebsrädern nach Anspruch 3 (Verdichtung erfolgt in Kompressionszylindern auf dem Turbinenrad) kann der Drehsinn des Turbinenrades durch Schließen der Brennraum-Auslaßdüsen für die Vorausfahrt umgekehrt werden, so daß für die Rückwärtsfahrt ein Verstellpropeller nicht erforderlich ist,
- ein Turboantriebsräder-System (50) mit verschiedenen Drehzahlbereichen und abgestuften Rädern eignet sich insbesondere für Schiffe, die oft die Fahrstufe wechseln und neu anfahren müssen,
- langsamlaufende Turboantriebsräder, die etwa den gleichen Durchmesser wie der anzutreibende Propeller haben, arbeiten besonders leistungsstark, da sie mit einem 3- bis 4mal längeren Hebelarm als der Kurbeltrieb eines Dieselmotors für ein vergleichbares Schiff auf den Propeller wirken; sie sind deshalb als Antriebsanlage für große Containerschiffe gedacht.

In den Zeichnungen sind drei Ausführungsbeispiele stark schematisiert dargestellt. Es zeigen:
Fig. 1 eine aus Turboantriebsrädern nach Anspruch 1 bestehende Schiffsantriebsanlage in einer teilweisen Seitenansicht (ein Rad im Querschnitt),
Fig. 2 ein Turboantriebsrad nach Anspruch 1 im Querschnitt,
Fig. 3 ein Turboantriebsrad nach Anspruch 2 im Querschnitt,
Fig. 4 eine aus langsam laufenden Turboantriebsrädern nach Anspruch 3 (Ansaugen und Verdichten in Kompressionszylindern) bestehende Schiffsantriebsanlage in einer teilweisen Seitenansicht (ein Rad im Querschnitt),
Fig. 5 eine Brennkammer zu Anspruch 1 in der Draufsicht,
Fig. 6 einen Brennraum zu Anspruch 3 in der Draufsicht,
Fig. 7 zwei im Radgehäuse fest angeordnete Brennkammern zu Anspruch 2 in der Draufsicht,
Fig. 8 ein aus drei Radsätzen bestehendes Turboantriebsräder-System nach Anspruch 5 für ein größeres Containerschiff in einer Seitenansicht

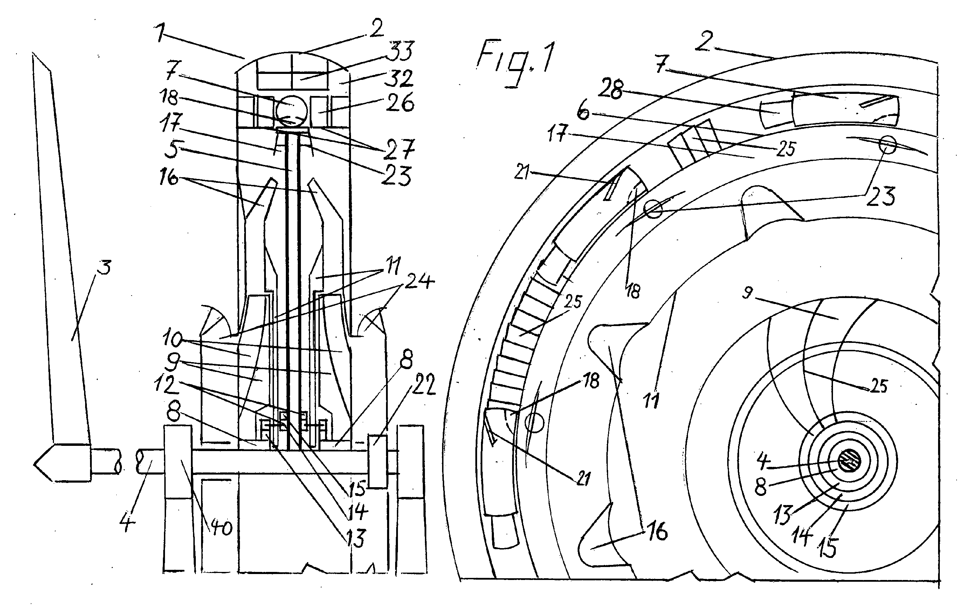

Fig. 1 zeigt eine aus Turboantriebsrädern nach Anspruch 1 bestehende Schiffsantriebsanlage in einer teilweisen Seitenansicht (ein Rad im Querschnitt). Auf beiden Seiten des Turbinenrades 5, das in einem feststehenden Radgehäuse 2 umläuft und auf seinem Umfang den Brennkammern-Ring 6 mit den darauf befindlichen Brennkammern 7 trägt, ist ein um die Propellerwelle 4 herumgebauter Radialverdichter 10 angeordnet. Jedem Radialverdichter ist ein über die Prppellerwelle gezogenes Hohlwellenstück 8 zugeordnet, das die Verdichterräder 9 trägt und von dem umlaufenden Turbinenrad über ein Planetengetriebe 12 entgegengesetzt zum Turbinenrad angetrieben wird. Das Verdichtergehäuse 11 ist fest mit dem Radgehäuse 2 verbunden. Die von den Verdichterrädern über Ausschnitte im Radgehäuse oder Luft-Ansaugstutzen 24 bei umlaufendem Turbinenrad angesaugte Luft wird nach der Verdichtung über Leitkanäle 16 in den unmittelbar unterhalb der Brennkammern befindlichen Luft-Ringraum 17 gedrückt, wo sie von Leitblechen 23 "erfaßt" und den Brennkammern zugeführt wird. Die Brennkammern sind an eine Kraftstoff- und Stromzuführung angeschlossen.

Bei gelöster Hauptkupplung 30 wird das Leerlauf-/Anfahrrad durch den Anlassermotor 20 gestartet, wobei die Kraftstoffzuführung und Zündung erst nach Erreichen einer bestimmten Drehzahl und Verdichtungsleistung der Radialverdichter erfolgt.

Die bei der Verbrennung des Kraftstoff-Luftgemischs gewonnenen heißen Arbeitsgase werden durch die Brennkammer-Auslaßdüsen 28 in die Schaufeln der auf beiden Seiten der Brennkammern und unmittelbar neben ihnen im Radgehäuse fest angeordneten Schaufelkränze 26 gepreßt und treiben das Turbinenrad per Rückstoß an.

Bei Schiffspropellern, die mit niedrigerer Drehzahl als das Turbinenrad betrieben werden sollen, wird das Turbinenrad auf der Propellerwelle nur drehbar gelagert und auf beiden Seiten über ein Planetengetriebe 12 , das seine Drehzahl auf die vorgesehene Drehzahl des Propellers untersetzt, mit der Propellerwelle verbunden.

Die auf beiden Seiten des Turbinenrades angeordneten Getriebe, mit denen die Hohlwellenstücke 8 angetrieben werden und die, mit denen die Drehzahl des Turbinenrades auf die vorgesehene Drehzahl des Propellers untersetzt wird, werden jeweils in einem Planetengetriebe 12 zu einer Getriebeeinheit zusammengefaßt.

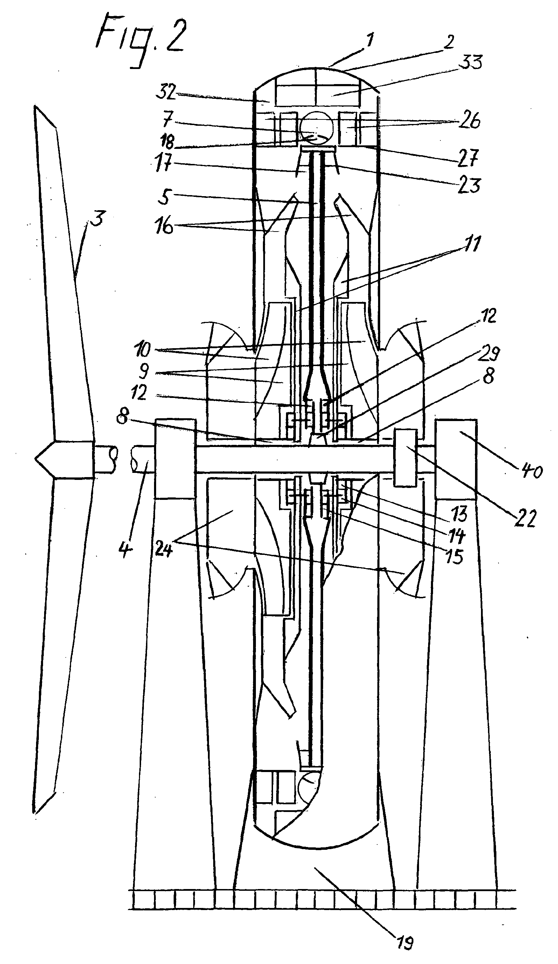

Fig. 2 zeigt ein Turboantriebsrad nach Anspruch 1 mit einem einstufigen Radialverdichter 10 auf beiden Seiten des Turbinenrades 5 im Querschnitt. Das Planetengetriebe 12 , mit dem die Hohlwellenstücke 8 vom Turbinenrad angetrieben werden, setzt sich aus einem Zahnkranz 13 (Sonnenrad) auf dem an der Rückwand des Verdichtergehäuses 11 gelegenen Wellenende des Hohlwellenstücks , den Planetenrädern 14 auf dem mit dem Radgehäuse 2 fest verbundenen Verdichtergehäuse und aus einem innenverzahnten feststehenden Außenrad 15 am Turbinenrad zusammen.

Die aus den Radialverdichtern in die Luft-Ringräume 17 gelangte Luft trägt dort zur Kühlung der Brennkammerunterseiten bei und wird bis zu einem gewissen Grad vorgewärmt. Über die einstellbaren Leitbleche 23 und die Brennkammer-Einlaßöffnungen wird sie dann gleichzeitig in sämtliche Brennkammern gedrückt.

Der Kraftstoff gelangt in die Brennkammern über einen mit einer Druckleitung verbundenen Kraftstoff-Ringraum 22 und über eine Bohrung in der Propellerwelle zunächst in den in der Nabe des Turbinenrades befindlichen Kraftstoff-Verteilungsraum 29 , von wo er mit Unterstützung durch die Fliehkraft und der damit verbundenen Saugwirkung über Leitungen bzw. Bohrungen den Kraftstoffdüsen zugeführt wird. Die Zündeinrichtungen in den Brennkammern sind an den elektrischen Strom über eine Leitung angeschlossen, die den Strom mit einem Schleifkontakt von einem Stromring abnimmt, der sich im Radgehäuse befindet.

Der in das Radgehäuse eingebaute U-förmige Kühlwasser-Ringraum 33 wird zur Kühlung der unmittelbar unter ihm befindlichen Brennkammern und Schaufelkränze über eine Ein- und Austrittsöffnung an einen Kühlwasserumlauf angeschlossen. Die Rotation des Turbinenrades bewirkt außerdem eine starke Luftkühlung der Brennkammern.

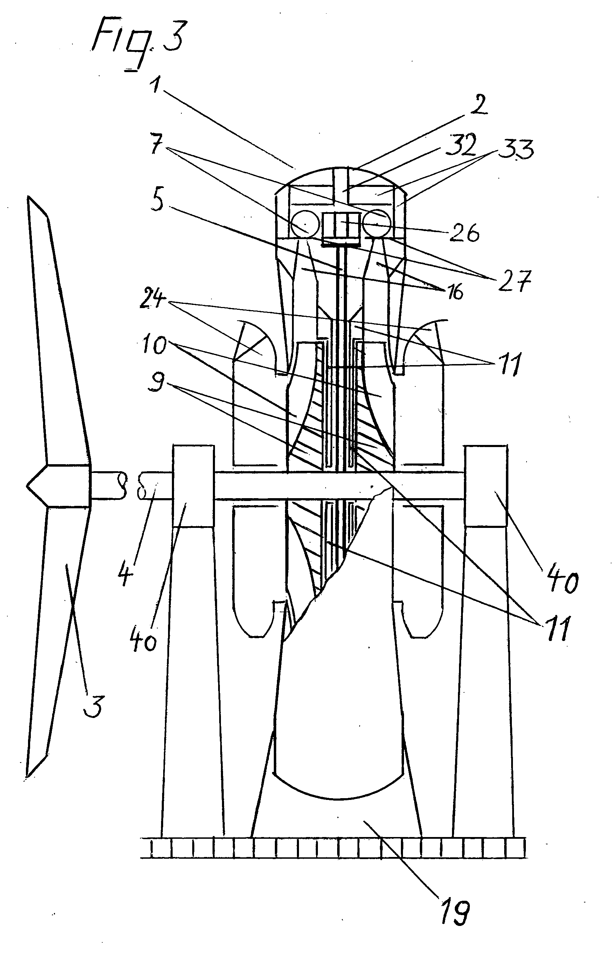

Fig. 3 zeigt im Querschnitt ein Turboantriebsrad nach Anspruch 2, bei dem die Brennkammern 7 auf den an beiden Seiten des Turbinenrades befindlichen, in das Radgehäuse 2 eingebauten Trommeln 27 gleichmäßig über den Umfang verteilt angeordnet sind. Die in den Radialverdichtern 10 verdichtete Verbrennungsluft gelangt über spiralförmige Leitkanäle 16, die mit dem Verdichtergehäuse 11 und den Brennkammern fest verbunden sind, in die Brennkammern.

Das Turbinenrad trägt auf seinem Umfang drei nebeneinander angeordnete Schaufelkränze 26, in die die Treibgase aus den unmittelbar neben den Schaufelkränzen befindlichen Brennkammern über die Brennkammer-Auslaßdüsen in Drehrichtung des Turbinenrades und annähernd tangential gepreßt werden und damit das Turbinenrad antreiben.

Die in das Radgehäuse eingebaute und die Schaufelkränze überdeckende U-förmige Abgasspirale 32 weist über dem mittleren Schaufelkranz radiale Ausschnitte auf, durch die die Treibgase, nachdem sie ihre Energie an das Turbinenrad abgegeben haben, in die Abgasspirale gelangen, wobei die Form der Schaufeln des mittleren Schaufelkranzes das Abströmen der Abgase begünstigt.

Die zu beiden Seiten der Abgasspirale befindlichen Kühlwasser-Ringräume 33 sind zur Kühlung der Brennkammern an einen Kühlwasserumlauf angeschlossen.

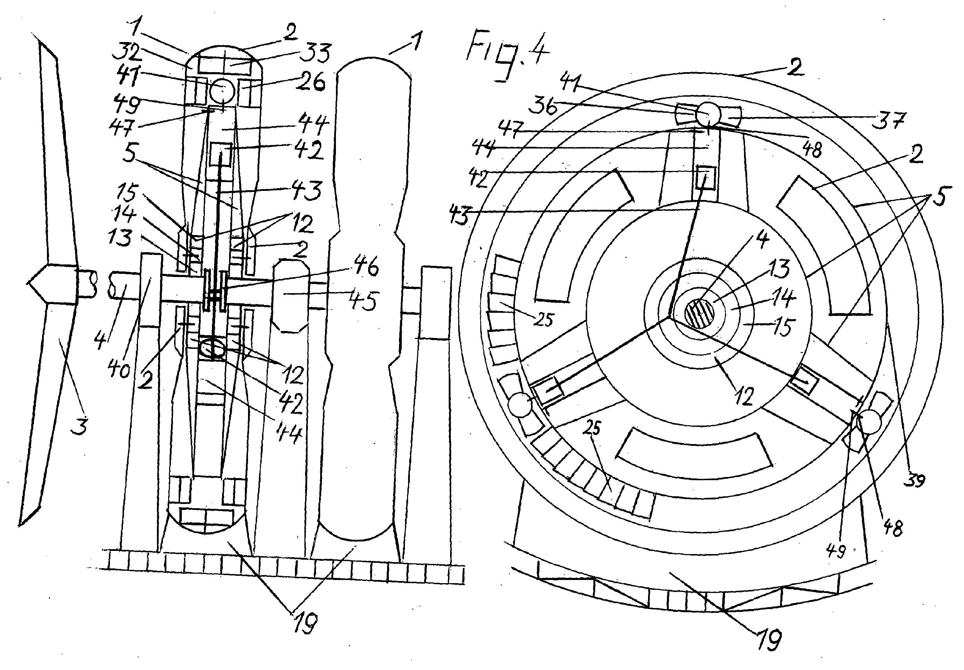

Fig. 4 zeigt eine aus langsam laufenden Turboantriebsrädern nach Anspruch 3 (Ansaugen und Verdichten der Verbrennungsluft in Kompressionszylindern auf dem Turbinenrad) bestehende Schiffsantriebsanlage in einer teilweisen Seitenansicht (ein Rad im Querschnitt). Die Turboantriebsräder sind eine Verbindung aus Kolbenbrennkraftmaschine und Turbine. Das Ansaugen und Verdichten der Luft bzw. des Kraftstoff-Luftgemischs erfolgt durch Kolben 42 und Pleuelstangen 43 in zwischen den Seitenrädern 35 des Turbinenrades 5 angeordneten Kompressionszylindern 44, die über spezielle Konstruktionen mit den Seitenrädern fest verbunden sind. Die auf der Propellerwelle 4 drehbar gelagerten Seitenräder sind am Umfang durch den Brennraum-Ring 39 mit den darauf gleichmäßig verteilten Brennräumen 41 verbunden, unter denen sich jeweils ein Kompressionszylinder befindet.

Die Propellerwelle ist im Bereich zwischen den beiden Seitenrädern zu einer Kurbelwelle 46 ausgebildet, an der die Pleuelstangen angreifen und bei umlaufender Propellerwelle bzw. Kurbelwelle die Kolben betätigen, wobei mit dem Abwärtsgang des Kolbens die Luft bzw. das Kraftstoff-Luftgemisch über das seitlich angeordnete Zylinder-Einlaßventil 47 angesaugt und - nach Schließung des Zylinder-Einlaßventils - mit dem nächsten Hub verdichtet wird. Dabei werden von jeweils zwei sich gegenüberliegenden Kolben die Pleuelstangen auf dem Kurbelzapfen so angeordnet, daß sie sich umgreifen.

Die verdichtete Luft wird vom Kolben über das Brennraum-Einlaßventil 48, das zuvor vom Kolben beim Aufwärtsgang mittels eines Stößels 49 geöffnet worden ist, in den Brennraum gedrückt, wobei die Zuführung des Kraftstoffs im Kompressionszylinder oder im Brennraum erfolgen kann, und zwar entweder beim Durchgang des Turbinenrades durch einen verstellbaren Nockenring im Radgehäuse oder elektromagnetisch gesteuert.

Die mit dem Brennraum-Ring 39 stark verankerten kugelförmigen Brennräume 41, deren innere Gestaltung eine "weiche" und langsamere Verbrennung begünstigt, besitzen auf jeder Seite Brennraum-Auslaßdüsen für die Vorausfahrt 36 und - entgegengesetzt dazu - Brennraum-Auslaßdüsen für die Rückwärtsfahrt 37, wobei auf beiden Seiten mit einer verstellbaren Scheibe 34, die in einer Radialnut des Brennraum-Rings geführt wird, die Brennraum-Auslaßdüsen für eine Fahrtrichtung verschlossen werden können.

Die Kraftübertragung vom Turbinenrad 5 auf die Propellerwelle erfolgt über Planetengetriebe 12, durch die die nur drehbar gelagerten Seitenräder 35 mit der Propellerwelle verbunden sind, wobei der Drehsinn der Propellerwelle entgegengesetzt zur Drehrichtung des Turbinenrades ausgerichtet wird.

Mit einem verstärkten Schwungmoment wird der wegen des Wegfalls des Verbrennungsdrucks fehlende Impuls auf den Kolben ausgeglichen, um den Verdichtungswiderstand zu überwinden und Drehgeschwindigkeitsschwankungen einzuschränken.

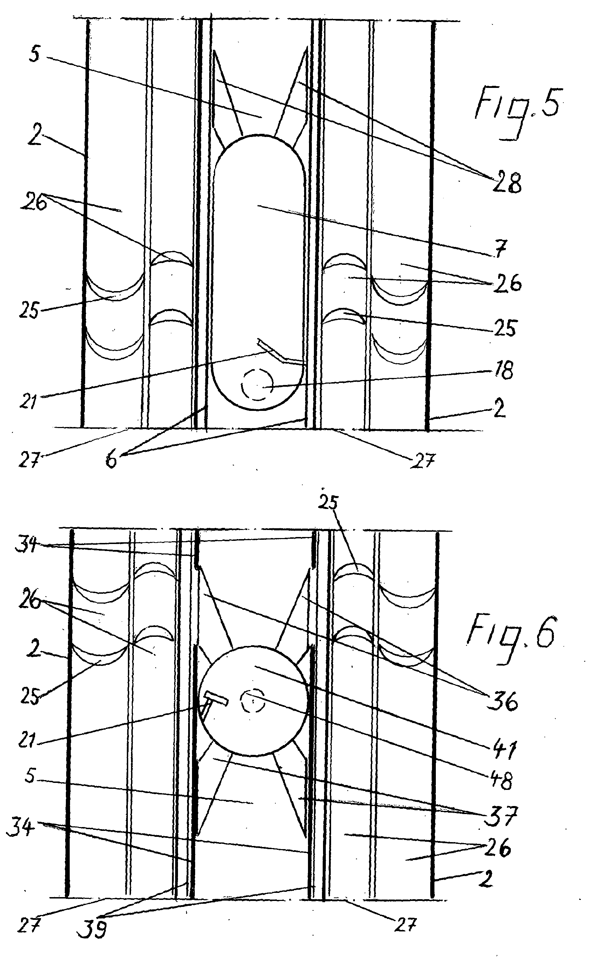

Fig. 5 zeigt in der Draufsicht eine Brennkammer 7 zu Anspruch 1, die auf dem Brennkammern-Ring 6 des Turbinenrades 5 angeordnet ist und auf beiden Seiten eine Brennkammer-Auslaßdüse 28 besitzt. Die bei der Verbrennung erzeugten Treibgase werden über die Brennkammer-Auslaßdüsen in die unmittelbar neben den Brennkammern angeordneten Schaufelkränze 26, die sich auf den in das Radgehäuse 2 eingebauten Trommeln befinden, gepreßt und treiben das Turbinenrad an. Nach Abgabe der Energie der Treibgase an das Turbinenrad gelangen die Abgase in eine Abgasspirale 32, die sich auf beiden Seiten des Radgehäuses an die Schaufelkränze anschließt, und werden von dort in eine Abgassammelleitung gedrückt.

Fig. 6 zeigt in der Draufsicht einen der auf dem Brennraum-Ring 39 des Turbinenrades 5 angeordneten Brennräume 41 zu Anspruch 3 (Ansaugen und Verdichten der Luft in Kompressionszylindern auf dem Turbinenrad). Der kugelförmige Brennraum besitzt auf beiden Seiten jeweils eine Brennraum-Auslaßdüse für die Vorausfahrt 36 und eine Brennraum-Auslaßdüse für die Rückwärtsfahrt 37. Mit einer verstellbaren Scheibe 34, die auf beiden Seiten in einer Radialnut geführt wird, können die Brennraum-Auslaßdüsen für eine Fahrtrichtung verschlossen werden. Die innere Gestaltung des Brennraums begünstigt eine langsamere stoßfreie Verbrennung.
Die auf den feststehenden Trommeln (27) angeordneten Schaufeln bzw. Kammern (25) sind nur angedeutet.

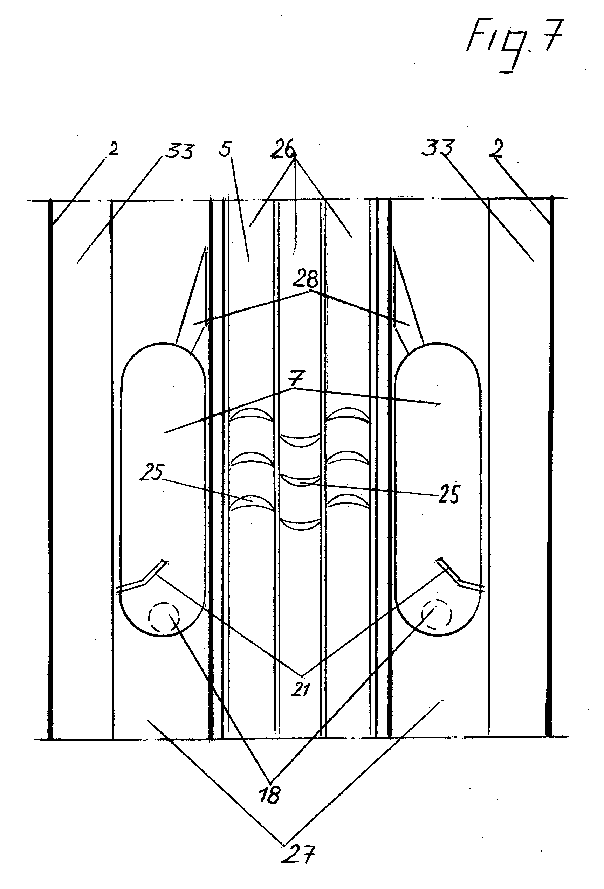

Fig. 7 zeigt in der Draufsicht zwei sich gegenüberstehende, auf den ins Radgehäuse 2 eingebauten Trommeln 27 fest angeordnete Brennkammern 7 zu Anspruch 2, aus denen die Treibgase über die Brennkammer-Auslaßdüse 28 in die auf dem Turbinenrad 5 befindlichen Schaufelkränze 26 in Drehrichtung des Turbinenrades gepreßt werden und es damit antreiben. Über dem mittleren Schaufelkranz befindet sich die Abgasspirale 32, die radiale Ausschnitte aufweist, durch die die Verbrennungsgase, nachdem sie ihre Energie an die beiden äußeren Schaufelkränze abgegeben haben, in die Abgasspirale gelangen, wobei die Form der Schaufeln des mittleren Schaufelkranzes das Abströmen begünstigt. Die Kühlwasser-Ringräume 33 sind an einen Kühlwasserumlauf angeschlossen.

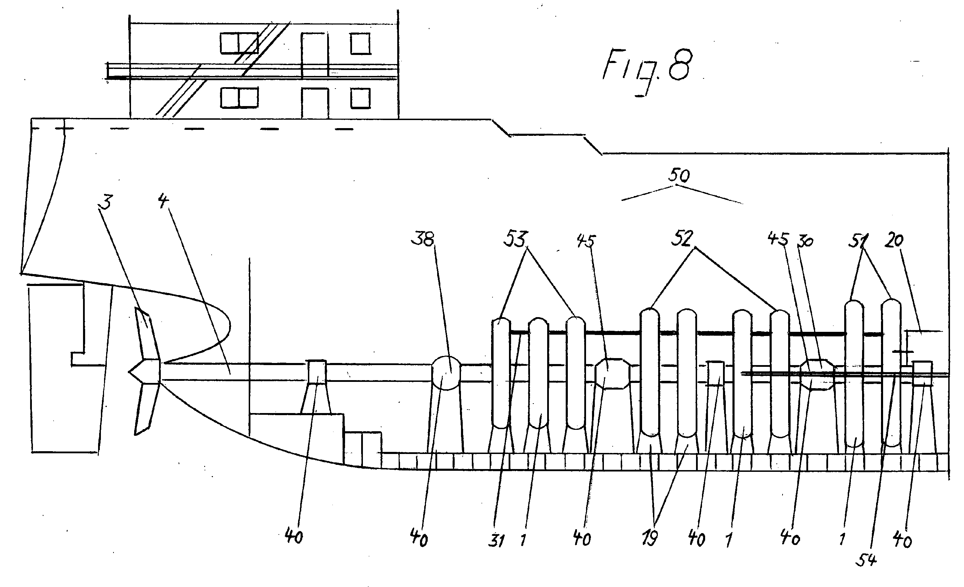

Fig. 8 zeigt in einer Seitenansicht ein Turboantriebsräder-System 50 nach Anspruch 5 für ein größeres Containerschiff, das aus langsamlaufenden, auf einer Propellerwelle 4 hintereinandergeschalteten Turboantriebsrädern 1, bei denen das Ansaugen und Verdichten der Verbrennungsluft in Kompressionszylindern 44 auf dem Turbinenrad erfolgt, besteht. Die Räder sind zu Radsätzen 51,52,53 mit abgestuften Raddurchmessern zusammengefaßt, die unterschiedliche Drehzahlbereiche abdecken. Der im Schiff am weitesten vorn, aus zwei Rädern bestehende Radsatz"Leerlauf und Anfahren" 51 weist zur Erzielung eines hohen Drehmoments den gleichen Durchmesser wie der anzutreibende Propeller 3 und die niedrigste Nenndrehzahl des Systems auf. Der Radsatz 51 ist über die Hauptkupplung 30 mit einbezogenem Schaltgetriebe zur Drehzahlangleichung 45 - vorzugsweise Planetengetriebe - mit der Propellerwelle verbunden. An ihn schließen sich zum Propeller hin die über höhere Nenndrehzahlen verfügenden Radsätze 52 und 53 an, zwischen denen sich ebenfalls ein Schaltgetriebe zur Drehzahlangleichung 45 befindet.

Bei gelöster Hauptkupplung wird das Leerlaufrad aus dem Radsatz 51 durch den auf der Hauptmaschinen-Plattform 54 (nur angedeutet) befindlichen Anlassermotor 20 gestartet und zum Anfahren des Schiffes das zweite mitdrehende Rad durch Kraftstoffzuführung und Zündung zugeschaltet. Nach dem Ankuppeln und Anfahren läuft die Propellerwelle mit der von allen Schaltgetrieben zur Drehzahlangleichung 45 übertragenen Drehzahl des Radsatzes"Leerlauf und Anfahren" um, wobei die weiteren Radsätze 52 und 53 zunächst noch leer mitdrehen. Zur Erhöhung der Schiffsgeschwindigkeit werden weitere Turboantriebsräder bzw. ganze Radsätze des Systems - beginnend mit dem sich an den Radsatz"Leerlauf und Anfahren" 51 anschließenden Radsatz 52 - durch Kraftstoffzuführung und Zündung zugeschaltet; dabei wird jeweils die Drehzahl des langsamer laufenden Radsatzes mit dem betreffenden Schaltgetriebe zur Drehzahlangleichung an die Drehzahl des schneller laufenden Radsatzes angeglichen, so daß die Propellerwelle ab dem zugeschalteten Radsatz mit dessen Drehzahl auf den Propeller wirkt. Sind schließlich sämtliche Radsätze 51, 52 und 53 im Einsatz, dann dreht der Propeller mit der Drehzahl des dem Propeller am nächsten stehenden und am schnellsten laufenden Radsatzes 53. Die zwischengeschalteten Schaltgetriebe zur Drehzahlangleichung ermöglichen es, daß alle Radsätze mit ihrer eigenen Nenndrehzahl und Nennleistung über denselben Wellenstrang auf den Propeller wirken.

Die Räder bzw. Radsätze eines Turboantriebsräder-Systems, die verschiedene Hebelarmlängen aufweisen (abgestuft sind) und die verschiedenen Drehzahlbereichen angehören, können mit ihren unterschiedlichen Drehmomenten den jeweiligen Fahrstufen bzw. Propellerbelastungen (Schiffswiderständen) angepaßt werden, können aber auch als Ganzes mit der Gesamtmaschinenleistung über denselben Wellenstrang auf den Propeller wirken; sie arbeiten dadurch immer in ihrem günstigsten Betriebspunkt. Ein in der Wellenanlage getrennt aufgestelltes Wechselgetriebe ist nicht erforderlich. Nennleistung und Nenndrehzahl der einzelnen Radsätze sind mit der Propellercharakteristik abgestimmt. Ein Verstellpropeller ist nicht erforderlich, da Räder nach Anspruch 3 für die Rückwärtsfahrt im Drehsinn umgekehrt werden können.

Bei der entgegengesetzt zum Drehsinn des Turbinenrades umlaufenden Kurbelwelle 46 ist das zeitliche Zusammenspiel der Hubbewegungen des Kolbens und der Zündung des Kraftstoff-Luftgemischs im Brennraum sowie eine einwandfreie Führung des Kolbens durch die Pleuelstange in der Zylinderachse genau einzustellen.

Traglager 40 stützen den Wellenstrang des Turboantriebsräder-Systems ab; das vom Propeller aus gesehen zweite Traglager bildet mit dem Drucklager 38 eine Einheit. Bei größeren Anlagen ist das Radgehäuse 2 über Stützkonstruktionen (19) mit dem Maschinenraumboden (hier nur angedeutet), der Hauptmaschinen-Plattform und der Maschinenraumdecke verbunden.

Die Zentralsteuerung steuert nach den gegebenen Maschinen-Kommandos den Einsatz und das Arbeiten der Radsätze und kontrolliert den entsprechenden Stand der Hauptkupplung 30 und aller Schaltgetriebe zur Drehzahlangleichung 45. Sind sämtliche Radsätze zugeschaltet, überwacht sie, daß alle Radsätze unter Drehzahlangleichung gemeinsam mit ihrer eigenen Nennleistung und Nenndrehzahl über den Wellenstrang auf den Propeller wirken.

Bei großen Turboantriebsrädern ist das Verdichtersystem mehrstufig oder mehrgehäusig aufgebaut, so daß sich z.B. unter jeder Brennkammer ein eigener Verdichter befindet, dessen Antriebswelle über Zahnräder mit dem Turbinenrad bzw. der Propellerwelle verbunden ist; die zusätzlichen Verdichter können durch Überströmkanäle an den um die Propellerwelle herumgebauten Hauptverdichter angeschlossen sein.

Für das erfindungsgemäße Turboantriebsrad (1) bzw. Turboantriebsräder-System (50) ergeben sich vielfältige Anwendungsmöglichkeiten. Als Kraftfahrzeugmotor z.B. kann das Turboantriebsräder-System je nach Fahrzeugtyp (LKW, PKW, Rennwagen) im Hinblick auf die zu bewältigenden Fahrwiderstände oder auf ein besonderes Beschleunigungsvermögen beim Rennwagen aufgebaut bzw. zusammengestellt werden. Das Turboantriebsräder-System wird durch hintereinandergeschaltete abgestufte Radsätze, die miteinander über Schaltgetriebe zur Drehzahlangleichung (45) verbunden sind, in verschiedene Drehzahlbereiche mit unterschiedlichen Drehmomenten gegliedert. Der Radsatz "Leerlauf und Anfahren" (51), dessen Räder den gleichen Durchmesser wie die anzutreibenden Triebräder haben und mit der kleinsten Drehzahl umlaufen, verfügt wegen des langen Hebelarms seiner Räder (Hebelarm = halber Triebraddurchmesser) über das höchste Drehmoment. Beim LKW wird dieser Radsatz entsprechend stark und mit mehreren Rädern ausgestattet, während beim Rennwagen der/die Radsätze "Schnellfahrt" mit den Drehzahlen für die hohen und höchsten Fahrgeschwindigkeiten den größten Anteil des Motors einnehmen.

Der Radsatz "Leerlauf und Anfahren" ist über die Hauptkupplung 30 mit einbezogenem Schaltgetriebe zur Drehzahlangleichung 45 mit dem Antriebswellenstrang verbunden, auf dem weitere Radsätze für bestimmte Fahrstufen - z.B. "Langsam, Schnellfahrt, Rückwärts" - angeordnet sind. Die Inbetriebnahme des Turboantriebsräder-Systems erfolgt durch Starten des Leerlaufrades aus dem Radsatz "Leerlauf und Anfahren" mit Hilfe des Anlassermotors 20 nach Erreichen einer bestimmten Drehzahl und Verdichtungsleistung. Eine Zentralsteuerung verhindert, daß Räder diese Drehzahl unbeabsichtigt unterschreiten und abschalten. Das Zu- bzw. Abschalten von Rädern bzw. Radsätzen bei veränderten Fahrwiderständen erfolgt durch die Zentralsteuerung je nach der Belastung der im Einsatz befindlichen Räder und nach der vom Fahrer per Schalthebel eingestellten Fahrstufe, wobei die Zentralsteuerung im Rahmen der Kapazität des Turboantriebsräder-Systems überwacht, daß alle Räder möglichst in ihrem günstigsten Betriebspunkt arbeiten.

Der Fahrer kann das Zu- bzw. Abschalten von Rädern durch die Zentralsteuerung abstellen und die Räder nach den von den Meßgeräten angezeigten Werten (Fahrgeschwindigkeit, Drehzahl der Radsätze, Treibstoffverbrauch usw.) einsetzen; Fehlschaltungen werden von der Zentralsteuerung durch Sperren verhindert. Auf längeren Strecken in der Ebene - wenn also die Leistungen und Drehmomente der Radsätze "Langsam" und "Schnellfahrt" ausreichen - kann der Radsatz "Leerlauf und Anfahren" abgeschaltet werden (Sperren der Kraftstoffzufuhr). Der Wellenstrang dreht dann ab dem Radsatz "Schnellfahrt" mit dessen Drehzahl, der höchsten Drehzahl des Turboantriebsräder-Systems; der abgeschaltete Radsatz "Leerlauf und Anfahren" läuft leer mit. Die zwischen den abgestuften Radsätzen angeordneten Schaltgetriebe zur Drehzahlangleichung 45 (vorzugsweise Planetengetriebe) ermöglichen es, daß das Turboantriebsräder-System mit unterschiedlichen Drehzahlen und Drehmomenten den Fahrstufen bzw. Fahrwiderständen angepaßt werden kann. Sind sämtliche Radsätze zugeschaltet und im Einsatz, wirken sie alle gemeinsam über die Schaltgetriebe zur Drehzahlangleichung mit ihrer eigenen Nenndrehzahl und Nennleistung über denselben Antriebswellenstrang auf die Triebräder. Ein Wechselgetriebe ist nicht erforderlich.

Beim Zuschalten (Aufnahme der Kraftstoffzufuhr und Zündung) eines schneller laufenden Radsatzes zu einem bereits arbeitenden Radsatz (Aufwärtsschalten) wird mit dem Schaltgetriebe zur Drehzahlangleichung zwischen diesen beiden Radsätzen die Drehzahl des arbeitenden langsameren Radsatzes auf die Drehzahl des zugeschalteten Radsatzes übersetzt, so daß der Antriebswellenstrang ab dem zugeschalteten Radsatz mit dessen Drehzahl umläuft; nicht zugeschaltete Radsätze laufen leer mit.

Beim Abwärtsschalten wird jeweils der schneller laufende Radsatz durch Sperren der Kraftstoffzufuhr abgeschaltet, so daß der Antriebswellenstrang ab dem abgeschalteten Radsatz mit der von dem zwischen diesen beiden Radsätzen befindlichen Schaltgetriebe zur Drehzahlangleichung übertragenen Drehzahl des noch arbeitenden langsameren Radsatzes umläuft.

Die Luft-Ansaugstutzen 24 der Verdichter auf den Turboantriebsrädern 1 werden über Luftkanäle an ein gemeinsames Abgasturbogebläse mit Filter angeschlossen, wenn das System mit höherem Luftdurchsatz betrieben werden soll.

Als Antriebsmotor für die Rotorblätter eines Hubschraubers wird das Turboantriebsrad 1 unterhalb der Rotorblätter horizontal mit senkrecht stehender Welle angeordnet. Der nach unten gerichtete Schubstrahl der umlaufenden Rotorblätter unterstützt das Ansaugen der Verbrennungsluft in den oberen Radialverdichter 10; dem unmittelbar darunter befindlichen zweiten Radialverdichter wird die Luft über einen im Hubschrauber nach vorn gerichteten Luftschacht zugeführt.

Die Leistung der Turbine des Turboantriebsrades kann durch einen breiteren Brennkammern-Ring 6, auf dem zwei Reihen Brennkammern 7 nebeneinander angeordnet sind, und durch entsprechende Auslegung der Verdichter verdoppelt werden.

### Bezugszeichenliste

### Ziff.:

- 1: Turboantriebsrad
- 2: Radgehäuse
- 3: Propeller
- 4: Propellerwelle
- 5: Turbinenrad
- 6: Brennkammern-Ring
- 7: Brennkammer
- 8: Hohlwellenstück
- 9: Verdichterrad
- 10: Radialverdichter
- 11: Verdichtergehäuse
- 12: Planetengetriebe
- 13: Zahnkranz (Sonnenrad)
- 14: Planetenräder
- 15: innenverzahntes Außenrad
- 16: Leitkanal
- 17: Luft-Ringraum
- 18: Brennkammer-Einlaßöffnung
- 19: Stützkonstruktion
- 20: Anlassermotor
- 21: Kraftstoffdüse/Brenner (nur angedeutet)
- 22: Kraftstoff-Ringraum
- 23: einstellbares Leitblech
- 24: Luft-Ansaugstutzen
- 25: Schaufeln bzw. Kammern (nur angedeutet)
- 26: Schaufelkranz
- 27: Trommel
- 28: Brennkammer-Auslaßdüse

### Ziff.:

- 29: Kraftstoff-Verteilungsraum
- 30: Hauptkupplung
- 31: Abgas-Sammelleitung
- 32: Abgasspirale
- 33: Kühlwasser-Ringraum
- 34: verstellbare Scheibe
- 35: Seitenräder
- 36: Brennraum-Auslaßdüse Voraus
- 37: Brennraum-Auslaßdüse Zurück
- 38: Drucklager
- 39: Brennraum-Ring
- 40: Traglager
- 41: Brennraum
- 42: Kolben
- 43: Pleuelstange
- 44: Kompressionszylinder
- 45: Schaltgetriebe zur Drehzahlangleichung
- 46: Kurbelwelle
- 47: Zylinder-Einlaßventil
- 48: Brennraum-Einlaßventil
- 49: Stößel
- 50: Turboantriebsräder-System
- 51: Radsatz "Leerlauf und Anfahren"
- 52: Radsatz "Langsame Fahrt"
- 53: Radsatz "Marschfahrt"
- 54: Hauptmaschinen-Plattform

## Patentansprüche

1. Turboantriebsrad, insbesondere für Schiffspropeller, **gekennzeichnet durch** folgende Merkmale:
- das Turboantriebsrad (1) vereinigt auf sich die Maschinenelemente Verdichter, Brennkammer sowie zur Kraftübertragung auf die Propellerwelle die Turbine und läuft in einem um die Propellerwelle herumgebauten feststehenden Radgehäuse (2) um,
- das Turboantriebsrad arbeitet als sebständige Maschineneinheit einzeln oder zu mehreren Rädern auf einer Propellerwelle (4) hintereinandergeschaltet als Turboantriebsräder-System (50) auf den Propeller,
- das mit der Propellerwelle fest, über ein Getriebe oder über eine schaltbare Kupplung verbundene Turbinenrad (5) trägt an seinem Umfang den Brennkammern-Ring (6) mit den darauf befindlichen, über den gesamten Umfang verteilten Brennkammern (7),
- auf beiden Seiten des Turbinenrades befindet sich ein um die Propellerwelle herumgebauter Radialverdichter (10), dessen Verdichterrad/-räder (9) fest auf der Propellerwelle angeordnet sind, während das Verdichtergehäuse (11) mit der Seitenwand des Radgehäuses (2) fest verbunden ist,
- bei Radialverdichtern (10), die mit einer anderen Drehzahl und/oder anderen Drehrichtung als das Turbinenrad betrieben werden sollen, sind die Verdichterräder auf einem auf beiden Seiten des Turbinenrades über die Propellerwelle gezogenen, drehbar gelagerten Hohlwellenstück (8) angeordnet,
- die Hohlwellenstücke (8) mit den darauf befindlichen Verdichterrädern werden **durch** das umlaufende Turbinenrad (5) über Planetengetriebe (12) in der Weise angetrieben, daß sie entgegengesetzt zum Turbinenrad und mit der für das vorgesehene Verdichtungsverhältnis erforderlichen Drehzahl umlaufen,
- das Planetengetriebe setzt sich aus einem Zahnkranz (Sonnenrad) (13) auf dem am Turbinenrad gelegenen Wellenende des Hohlwellenstücks (8), den Planetenrädern (14) auf dem feststehenden Verdichtergehäuse (11) und aus einem innenverzahnten Außenrad (15) am Turbinenrad zusammen,
- die auf beiden Seiten des **durch** Stützkonstruktionen (19) abgestützten Radgehäuses (2) über Luft-Ansaugstutzen (24) bzw. Ausschnitte im Radgehäuse von den Verdichterrädern bei umlaufendem Turbinenrad in den Radialverdichter (10) gesaugte Luft gelangt nach der Verdichtung über Leitkanäle (16) in den unterhalb der Brennkammern (7) befindlichen Luft-Ringraum (17), wo sie mit Unterstützung **durch** einstellbare Leitbleche (23) und **durch** die Fliehkraft gleichzeitig über Brennkammer-Einlaßöffnungen (18) in sämtliche Brennkammern gedrückt wird; bei der Kühlung der Brennkammer-Unterseiten wird sie bis zu einem gewissen Grad vorgewärmt,
- das Turboantriebsrad (1) wird bei gelöster Hauptkupplung (30) **durch** den Anlassermotor (20) nach Erreichen einer bestimmten Drehzahl und einer bestimmten Verdichtungsleistung der Radialverdichter mit Aufnahme der Kraftstoffzuführung und Zündung gestartet,
- das Turbinenrad (5) verfügt über das erforderliche Schwungmoment, um bei der Rotation den Widerstand überwinden zu können, den ihm die Radialverdichter **durch** ihre Verdichtungsarbeit entgegensetzen und zum Ausgleich von Drehgeschwindigkeitsschwankungen,
- der Kraftstoff gelangt über den mit einer Druckleitung verbundenen Kraftstoff-Ringraum (22) auf der Propellerwelle und über eine Bohrung in der Propellerwelle in den in der Nabe des Turbinenrades angeordneten Kraftstoff-Verteilungsraum (29), an den die Leitungen bzw. Bohrungen zu den Kraftstoffdüsen bzw. Brennern (21) in den Brennkammern angeschlossen sind, wobei die Fliehkraft die Kraftstoffzuführung unterstützt,
- der elektrische Strom für die Zündeinrichtung in den Brennkammern wird über eine Leitung zugeführt, die den Strom mit einem Schleifkontakt von einem Stromring abnimmt, der sich im Radgehäuse (2) befindet,
- unmittelbar anschließend an den Brennkammern-Ring (6) mit den darauf befindlichen Brennkammern sind auf beiden Seiten Schaufelkränze (26) fest auf den in das Radgehäuse eingebauten Trommeln (27) angeordnet,
- nach der Verbrennung des Kraftstoff-Luftgemischs in den Brennkammern werden die Verbrennungsgase über die entgegengesetzt zur Drehrichtung des Turbinenrades ausgerichteten Brennkammer-Auslaßdüsen (28) auf beiden Seiten der Brennkammern in die Schaufeln bzw. Kammern der Schaufelkränze gedrückt und treiben das Turbinenrad per Rückstoß an,
- bei Schiffspropellern, die mit niedrigerer Drehzahl als das Turbinenrad betrieben werden sollen, wird das Turbinenrad auf der Propellerwelle nur drehbar gelagert und auf beiden Seiten über ein Untersetzungsgetriebe, vorzugsweise Planetengetriebe, das seine Drehzahl auf die Drehzahl des Schiffspropellers untersetzt, mit der Propellerwelle verbunden, wobei es mit dem ebenfalls auf beiden Seiten des Turbinenrades befindlichen Planetengetriebe (12) für den Antrieb der Hohlwellenstücke (8) zu einer Getriebeeinheit zusammengefaßt werden kann,
- der in das Radgehäuse (2) eingebaute und die Brennkammern und Schaufelkränze überdeckende U-förmige Kühlwasser-Ringraum (33) wird über eine Ein- und Austrittsöffnung an einen Kühlwasserumlauf zur Kühlung der Brennkammern und Schaufelkränze angeschlossen,
- nach Abgabe der Energie der Treibgase an das Turbinenrad gelangen die Abgase in eine Abgasspirale (32), die sich auf beiden Seiten des Radgehäuses unmittelbar an den Schaufelkranz anschließt, wobei die Form der Schaufeln der Schaufelkränze das Abströmen der Abgase begünstigt, und werden von dort in eine Abgas-Sammelleitung gedrückt.

2. Turboantriebsrad nach Anspruch 1, **gekennzeichnet durch** folgende Merkmale:
- die Brennkammern (7) sind auf den an beiden Seiten des Turbinenrades (5) befindlichen, in das Radgehäuse (2) eingebauten Trommeln (27) gleichmäßig über den Umfang verteilt angeordnet und an eine Kraftstoff- und Stromzuführung angeschlossen,
- die in den Radialverdichtern (10) verdichtete Verbrennungsluft gelangt über spiralförmige Leitkanäle (16), die mit dem Verdichtergehäuse (11) und den Brennkammern fest verbunden sind, in die Brennkammern,
- das Turbinenrad trägt auf seinem Umfang drei nebeneinander angeordnete Schaufelkränze (26), in die die Treibgase über die Brennkammer-Auslaßdüsen (28) der unmittelbar neben den Schaufelkränzen befindlichen Brennkammern in Drehrichtung des Turbinenrades und annähernd tangential gepreßt werden und das Turbinenrad antreiben,
- die in das Radgehäuse eingebaute und die Schaufelkränze überdeckende U-förmige Abgasspirale (32) weist über dem mittleren Schaufelkranz radiale Ausschnitte auf, **durch** die die Treibgase, nachdem sie ihre Energie an das Turbinenrad abgegeben haben, in die Abgasspirale gelangen, wobei die Form der Schaufeln des mittleren Schaufelkranzes das Abströmen der Abgase begünstigt,
- die zu beiden Seiten der Abgasspirale befindlichen Kühlwasser-Ringräume (33) sind zur Kühlung der Brennkammern an einen Kühlwasserumlauf angeschlossen.

3. Turboantriebsrad nach Anspruch 1, **gekennzeichnet durch** folgende Merkmale:
- das Turboantriebsrad (1) ist eine Verbindung aus Kolbenbrennkraftmaschine und Turbine, bei dem die Verbrennungsluft von Kolben in Zylindern angesaugt und verdichtet wird, die Verbrennung aber außerhalb der Zylinder in Brennräumen auf dem Turbinenrad stattfindet,
- die auf der Propellerwelle (4) drehbar gelagerten Seitenräder (35) des Turbinenrades (5) sind am Umfang **durch** den Brennraum-Ring (39) mit den darauf gleichmäßig verteilten Brennräumen (41) verbunden,
- das Ansaugen und Verdichten der Luft bzw. des Kraftstoff-Luftgemischs erfolgt **durch** Kolben (42) und Pleuelstangen (43) in zwischen den Seitenrädern angeordneten Kompressionszylindern (44), die über spezielle Konstruktionen mit den Seitenrädern fest verbunden sind, und von denen sich jeweils einer unmittelbar unter einem Brennraum befindet,
- die Propellerwelle ist im Bereich zwischen den beiden Seitenrädern zu einer Kurbelwelle (46) ausgebildet, an der die Pleuelstangen angreifen und bei umlaufender Propellerwelle bzw. Kurbelwelle die Kolben betätigen, wobei mit dem Abwärtsgang des Kolbens die Luft bzw. das Kraftstoff-Luftgemisch über das seitlich angeordnete Zylinder-Einlaßventil (47) angesaugt und - nach Schließung des Zylinder-Einlaßventils - mit dem nächsten Hub verdichtet wird,
- die verdichtete Luft wird vom Kolben über das Brennraum-Einlaßventil (48), das zuvor vom Kolben beim Aufwärtsgang mittels eines Stößels geöffnet worden ist, in den Brennraum gedrückt, wobei die **durch** einen verstellbaren Nockenring im Radgehäuse oder elektromagnetisch gesteuerte Zuführung des Kraftstoffs im Kompressionszylinder oder im Brennraum erfolgen kann,
- die mit dem Brennraum-Ring (39) stark verankerten kugelförmigen Brennräume (41), deren innere Gestaltung eine "weiche" und langsamere Verbrennung begünstigt, besitzen auf jeder Seite Brennraum-Auslaßdüsen für die Vorausfahrt (36) und - entgegengesetzt dazu - Brennraum-Auslaßdüsen für die Rückwärtsfahrt (37), wobei auf beiden Seiten mit einer verstellbaren Scheibe (34), die in einer Radialnut des Brennraum-Rings geführt wird, die Brennraum-Auslaßdüsen für eine Fahrtrichtung verschlossen werden können,
- die Kraftübertragung von dem Turbinenrad (5) auf die Propellerwelle erfolgt über Planetengetriebe (12), **durch** die die nur drehbar gelagerten Seitenräder (35) mit der Propellerwelle verbunden sind, wobei der Drehsinn des Turbinenrades entgegengesetzt zur Drehrichtung der Propellerwelle ausgerichtet wird,
- mit einem verstärkten Schwungmoment wird der wegen des Wegfalls des Verbrennungsdrucks fehlende Impuls auf den Kolben ausgeglichen, um den Verdichtungswiderstand zu überwinden und Drehgeschwindigkeitsschwankungen einzuschränken,
- bei der entgegengesetzt zum Drehsinn des Turbinenrades umlaufenden Kurbelwelle ist eine genaue Einstellung des zeitlichen Zusammenspiels der Hubbewegungen des Kolbens und der Zündung des Kraftstoff-Luftgemischs in den Brennräumen erforderlich sowie eine exakte Führung des Kolbens **durch** die Pleuelstange in der Zylinderachse zu gewährleisten,
- statt von einer Kurbelwelle können die Kolben bei kleinen Anlagen auch von hydraulischen oder pneumatischen Vorrichtungen, die von der Propellerwelle betätigt werden, in Hubbewegungen versetzt werden.

4. Turboantriebsräder-System nach Anspruch 1 bis 3, **gekennzeichnet durch** folgende Merkmale:
- die Gesamtmaschinenleistung eines Schiffes ist auf mehrere Turboantriebsräder aufgeteilt, die auf einer Propellerwelle hintereinandergeschaltet ein Turboantriebsräder-System (50) ergeben, bei dem entsprechend der jeweiligen Propellerbelastung bzw. Fahrstufe Turboantriebsräder im Betrieb zu- bzw. abgeschaltet werden können, so daß nur die Leistung bestimmter Räder zum Einsatz zu kommen braucht, die dann immer im günstigsten Betriebspunkt arbeiten,
- bei der einfachsten Form eines mittelschnell- oder schnellaufenden Turboantriebsräder-Systems mit Rädern nach Anspruch 1 sind das Turbinenrad (5) mit den darauf befindlichen Brennkammern (7) und die Verdichterräder (9) fest auf der Propellerwelle (4) angeordnet und laufen mit der gleichen Drehzahl und im gleichen Drehsinn um; das Verdichtergehäuse (11) ist fest mit dem Radgehäuse (2) verbunden,
- die Kraftstoffzuführung zu den Brennkammern erfolgt über Bohrungen in der Propellerwelle und in dem Turbinenrad, wobei die Fliehkraft bei umlaufendem Turbinenrad und die daraus resultierende Saugwirkung in den Bohrungen die Zuführung unterstützt,
- die Räder sind zu abgestuften, in den Raddurchmessern unterschiedlichen Radsätzen zusammengefaßt, die verschiedene Drehzahlbereiche mit verschiedenen Drehmomenten abdecken, z.B. die Fahrstufen "Leerlauf und Anfahren, Langsame Fahrt, Marschfahrt",
- der aus zwei Rädern bestehende Radsatz "Leerlauf und Anfahren" ist über die Hauptkupplung (30) mit einbezogenem Schaltgetriebe zur Drehzahlangleichung (45) mit der Propellerwelle verbunden, auf der die weiteren, jeweils über Schaltgetriebe zur Drehzahlangleichung angeschlossenen Radsätze angeordnet sind; die Schaltgetriebe zur Drehzahlangleichung ermöglichen es, vom langsamsten Radsatz "Leerlauf und Anfahren" mit dem höchsten Drehmoment **durch** Zuschalten (Aufnahme der Kraftstoffzufuhr und Zündung) des nächstfolgenden Radsatzes "Langsame Fahrt" aufwärts bis in den Radsatz "Marschfahrt" zu schalten, wobei jeweils **durch** das betreffende Schaltgetriebe zur Drehzahlangleichung die Drehzahl des langsameren Radsatzes auf die Drehzahl des zugeschalteten schnelleren Radsatzes übersetzt wird, so daß die Propellerwelle immer ab dem zugeschalteten Radsatz mit dessen Drehzahl umläuft bis schließlich in der Marschfahrt sämtliche Radsätze im Einsatz sind und der Propeller mit der schnellsten Drehzahl dreht,
- beim Abwärtsschalten wird jeweils der schneller laufende Radsatz **durch** Sperren der Kraftstoffzufuhr abgeschaltet, so daß die Propellerwelle ab dem abgeschalteten Radsatz, der jetzt nur noch leer mitdreht, mit der von dem zwischen beiden Radsätzen befindlichen Schaltgetriebe zur Drehzahlangleichung übertragenen Drehzahl des noch arbeitenden Radsatzes umläuft; das setzt sich fort bis nur noch aus dem Radsatz "Leerlauf und Anfahren" das Leerlaufrad umläuft und **durch** Ausrücken der Hauptkupplung der Wellenstrang abgekuppelt wird,
- die Zentralsteuerung steuert das Zu- bzw. Abschalten der Turboantriebsräder entsprechend der Fahrstufe bzw. Propellerbelastung, so daß die zum Einsatz kommenden Räder immer im günstigsten Betriebspunkt arbeiten.

5. Turboantriebsräder-System nach Anspruch 1 bis 4, **gekennzeichnet durch** folgende Merkmale:
- ein Turboantriebsräder-System für ein größeres Containerschiff setzt sich vorzugsweise aus langsamlaufenden, nach Drehzahlbereichen abgestuften Turboantriebsrädern nach Anspruch 3 (Ansaugen und Verdichten der Verbrennungsluft in Kompressionszylindern auf dem Turbinenrad) zusammen, wobei der in Schiffsrichtung am weitesten vorn stehende, aus zwei Rädern bestehende Radsatz"Leerlauf und Anfahren" (51) zur Erzielung eines hohen Drehmoments den gleichen Durchmesser wie der anzutreibende Propeller und die niedrigste Nenndrehzahl des Systems besitzt, während die sich zum Propeller hin anschließenden Radsätze (52 und 53) die vorgesehene Nennleistung und Nenndrehzahl der Fahrstufen aufweisen, denen sie zugeordnet sind,
- der Radsatz"Leerlauf und Anfahren" ist über die Hauptkupplung (30), in die ein Schaltgetriebe zur Drehzahlangleichung (45),vorzugsweise Planetengetriebe, einbezogen ist, mit der Propellerwelle verbunden, während sich zwischen den Radsätzen (52 und 53) nur ein Schaltgetriebe zur Drehzahlangleichung (45) befindet,
- bei gelöster Hauptkupplung wird das Leerlaufrad aus dem Radsatz"Leerlauf und Anfahren" **durch** den Anlassermotor (20) gestartet und zum Anfahren des Schiffes das zweite mitdrehende Rad **durch** Kraftstoffzuführung und Zündung zugeschaltet, so daß die Propellerwelle nach dem Einrücken der Hauptkupplung mit der von allen Schaltgetrieben zur Drehzahlangleichung übertragenen Drehzahl des Radsatzes"Leerlauf und Anfahren" umläuft und die weiteren Radsätze (52 und 53) zunächst leer mitdrehen,
- zur Erhöhung der Schiffsgeschwindigkeit werden weitere Turboantriebsräder bzw. ganze Radsätze des Systems - beginnend mit dem sich an den Radsatz"Leerlauf und Anfahren" (51) anschließenden Radsatz (52) - **durch** Aufnahme der Kraftstoffzufuhr und Zündung zugeschaltet, wobei jeweils die Drehzahl des langsamer laufenden Radsatzes mit dem betreffenden Schaltgetriebe zur Drehzahlangleichung (45) auf die Drehzahl des schneller laufenden Radsatzes übersetzt wird, so daß die Propellerwelle (4) ab dem zugeschalteten Radsatz mit dessen Drehzahl auf den Propeller wirkt bis schließlich in der Marschfahrt sämtliche Radsätze (51,52,53) im Einsatz sind und der Propeller mit der Drehzahl des Radsatzes "Marschfahrt" (53) dreht,
- Nennleistung und Nenndrehzahl der einzelnen Radsätze sind mit der Propellercharakteristik abgestimmt,
- das Turboantriebsräder-System, dessen Räder bzw. Radsätze verschiedene Hebelarmlängen aufweisen (abgestuft sind) und die verschiedenen Drehzahlbereichen angehören, kann mit unterschiedlichen Drehmomenten bestimmten Fahrstufen bzw. Propellerbelastungen (Schiffswiderständen) angepaßt werden; es kann aber auch als Ganzes mit der Gesamtmaschinenleistung wirken, wobei sämtliche Radsätze über die zwischengeschalteten Schaltgetriebe zur Drehzahlangleichung gemeinsam mit ihrer eigenen Nenndrehzahl und Nennleistung über denselben Wellenstrang auf den Propeller arbeiten; ein in der Wellenanlage getrennt aufgestelltes Wechselgetriebe als Drehmomentwandler ist nicht erforderlich,
- die über die Abgasspiralen (32) in die Abgas-Sammelleitung (31) gelangten Abgase werden einer Nutzleistungsturbine zugeführt, mit der den Verdichtern auf den Turboantriebsrädern (1) vorgeschaltete Gebläse angetrieben werden können

6. Turboantriebsräder-System nach Anspruch 1 bis 5, **gekennzeichnet durch** folgende Merkmale:
- mit der Eingabe des ersten Maschinen-Kommandos in den Maschinentelegrafen des Schiffes steuert und überwacht eine Zentralsteuerung in Verbindung mit einer Regeleinrichtung folgende Funktionen des Turboantriebsräder-Systems (50):
- den richtigen Stand der Hauptkupplung (30) und der Schaltgetriebe zur Drehzahlangleichung (45) vor und nach der Ausführung der Maschinen-Kommandos,
- das Starten des Leerlaufrades und der weiteren Räder erst nach Erreichen einer bestimmten Drehzahl und Verdichtungsleistung sowie das unbeabsichtigte Unterschreiten der Drehzahl und Abschalten der Räder,
- das Zu- bzw. Abschalten von Turboantriebsrädern bzw. Radsätzen zur Anpassung der Maschinenleistung und Drehzahl an die Fahrstufe bzw. Propellerbelastung, wobei zu überwachen ist, daß die zum Einsatz kommenden Räder in ihrem günstigsten Betriebspunkt arbeiten,
- bei einem Turboantriebsrad nach Anspruch 3 (Ansaugen und Verdichten in Kompressionszylindern auf dem Turbinenrad) steuert die Zentralsteuerung das zeitliche Zusammenspiel der Hubbewegungen des Kolbens und der Zündung des Kraftstoff-Luftgemischs im Brennraum,
- das Verdichtersystem sowie die Kraftstoff- und Stromzuführung zu den Brennkammern,
- das Kühl- und Abgassystem.

7. Turboantriebsräder-System nach Anspruch 1 bis 6, **gekennzeichnet durch** folgende Merkmale:
- bei der Verwendung eines Turboantriebsräder-Systems (50) als Kraftfahrzeugmotor sind die in den Raddurchmessern abgestuften und über Schaltgetriebe zur Drehzahlangleichung (45) miteinander verbundenen Radsätze je nach dem Verwendungszweck des Kraftfahrzeugs (z.B. LKW, PKW, Rennwagen) in Drehzahlbereiche mit bestimmten Nennleistungen und Drehmomenten gegliedert; dabei ist beim LKW am stärksten der untere Drehzahlbereich mit großen Rädern, die über einen langen Hebelarm und damit über ein hohes Drehmoment verfügen, ausgestattet, während beim Rennwagen die zur Beschleunigung in der Ebene vorgesehenen Radsätze mit hohen und höchsten Drehzahlen umlaufen und den größten Anteil des Motors einnehmen,
- der Radsatz "Leerlauf und Anfahren" (51) hat den gleichen Durchmesser wie die anzutreibenden Triebräder des Kraftfahrzeugs; der Hebelarm der Turboantriebsräder (Hebelarm = halber Triebraddurchmesser) ist damit bedeutend länger als der Hebelarm des Kurbeltriebs einer vergleichbaren Kraftfahrzeug-Kolbenbrennkraftmaschine,
- der Radsatz "Leerlauf und Anfahren" ist über die Hauptkupplung (30) mit einbezogenem Schaltgetriebe zur Drehzahlangleichung (45) mit dem Antriebswellenstrang, auf dem die weiteren Radsätze angeordnet sind, verbunden; eine Zentralsteuerung überwacht, daß die Räder eine bestimmte Drehzahl nicht unbeabsichtigt unterschreiten und abschalten,
- das Zu- bzw. Abschalten von Rädern bei veränderten Fahrwiderständen erfolgt **durch** die Zentralsteuerung je nach der Belastung der im Einsatz befindlichen Räder und der vom Fahrer per Wählhebel beim Aufwärts- bzw. Abwärtsschalten eingestellten Fahrstufe ("Leerlauf/Anfahren, Langsam, Schnellfahrt, Rückwärts") unter Berücksichtigung der Charakteristik und Kapazität des Turboantriebsräder-Systems,
- beim Zuschalten (Aufnahme der Kraftstoffzufuhr und Zündung) eines schneller laufenden Radsatzes zu einem bereits arbeitenden Radsatz (Aufwärtsschalten) wird mit dem Schaltgetriebe zur Drehzahlangleichung (45) zwischen diesen beiden Radsätzen die Drehzahl des arbeitenden Radsatzes auf die Drehzahl des zugeschalteten Radsatzes übersetzt, so daß der Antriebswellenstrang ab dem zugeschalteten Radsatz mit dessen Drehzahl umläuft; die nicht arbeitenden Radsätze laufen leer mit oder werden abgekuppelt,
- beim Abwärtsschalten wird jeweils der schneller laufende Radsatz **durch** Sperren der Kraftstoffzufuhr abgeschaltet, so daß der Antriebswellenstrang mit der von dem zwischen diesen beiden Radsätzen befindlichen Schaltgetriebe zur Drehzahlangleichung übertragenen Drehzahl des noch arbeitenden langsameren Radsatzes umläuft,
- sind sämtliche Räder bei der "Schnellfahrt" im Einsatz, wirken sie alle bei entsprechendem Gasgeben **durch** den Fahrer über die zwischengeschalteten Schaltgetriebe zur Drehzahlangleichung mit ihrer eigenen Nenndrehzahl und Nennleistung über denselben Antriebswellenstrang auf die Triebräder, wobei die Zentralsteuerung überwacht, daß die Räder in ihrem günstigsten Betriebspunkt arbeiten.

8. Turboantriebsrad nach Anspruch 1 bis 7, **gekennzeichnet durch** folgende Merkmale:
- als Antriebsmotor für die Rotorblätter eines Hubschraubers wird das Turboantriebsrad 1 unterhalb der Rotorblätter horizontal mit senkrecht stehender Welle angeordnet. Der nach unten gerichtete Schubstrahl der umlaufenden Rotorblätter unterstützt das Ansaugen der Verbrennungsluft in den oberen Radialverdichter 10; dem unmittelbar darunter befindlichen zweiten Radialverdichter wird die Luft über einen im Hubschrauber nach vorn gerichteten Luftschacht zugeführt,
- die Leistung der Turbine des Turboantriebsrades kann **durch** einen breiteren Brennkammern-Ring 6, auf dem zwei Reihen Brennkammern 7 nebeneinander angeordnet sind, und **durch** entsprechende Auslegung der Verdichter verdoppelt werden.
